# EUROPÄISCHE PATENTANMELDUNG

(11) **EP 1 462 239 A2**
(43) Veröffentlichungstag der Anmeldung: **29.09.2004**
(21) Anmeldenummer: 04007055.9
(22) Anmeldetag: 24.03.2004
(51) Int. Cl.: B29C 70/48, B29C 70/08

(54) **Verfahren zur Herstellung von Bade- und Duschwannen**

(30) Priorität: 24.03.2003 DE 10313103
(71) Anmelder: Hüppe GmbH & Co., D-26160 Bad Zwischenahn (DE)
(72) Erfinder: Karslioglu, Osman Necdet, 2/7 Kat 3 Alsancak-Izmir (TR); Pilster, Bernd, 28205 Bremen (DE)
(74) Vertreter: Eisenführ, Speiser & Partner

(57) **Zusammenfassung**

Das beschriebene Verfahren zur Herstellung von Bade- und Duschwannen aus Kunststoff weist die Schritte auf, mindestens eine erste Faserlage (8) auf einer Oberfläche einer ersten Form (2) und/oder einer zweiten Form (4) aufzubringen, wobei die Oberfläche (2a) der ersten Form (2) in Bezug auf Verlauf und Ausbildung der Oberseite des herzustellenden Wannenkörpers (18) und die Oberfläche (4a) der zweiten Form (4) in Bezug auf Verlauf und Ausbildung der Unterseite des herzustellenden Wannenkörpers (18) entspricht, die Formen (2, 4) zu schließen, so dass zur Bildung des Wannenkörpers (18) zwischen diesen ein Zwischenraum (20) entsteht, der die Faserlagen (8, 14) aufnimmt, Gießmaterial in den Zwischenraum (20) zu geben und nach Aushärtung des Gießmaterials die Formen (2, 4) zu öffnen und den so hergestellten Wannenkörper (18) zu entnehmen.

## Beschreibung

Die Erfindung betrifft ein Verfahren zur Herstellung von Bade- und Duschwannen aus Kunststoff.

Seit längerem sind auf dem Markt Bade- und Duschwannen auch aus Kunststoff verfügbar. Derartige Bade- und Duschwannen werden gewöhnlich aus Polymerbeton oder Acryl hergestellt. Polymerbeton besitzt zwar eine hohe Festigkeit, ist jedoch schwer und eignet sich deshalb nicht zur Herstellung größerer Wannen. Acryl besitzt zwar demgegenüber ein geringeres spezifisches Gewicht, weist aber eine größere Instabilität auf, die es bei der Konstruktion und der Herstellung der Wannen zu berücksichtigen gilt.

Es ist deshalb Aufgabe der vorliegenden Erfindung, ein Verfahren vorzuschlagen, welches die Herstellung von verhältnismäßig leichten und gleichwohl stabilen Bade- und Duschwannen ermöglicht und außerdem unabhängig von der gewünschten Größe eine höhere Flexibilität bietet, sodass auch die Herstellung von genngen Stückzahlen wirtschaftlich interessant bleibt.

Diese Aufgabe wird dadurch gelöst, dass ein Verfahren zur Herstellung von Bade- und Duschwannen aus Kunststoff vorgeschlagen wird, welches die Schritte aufweist,
- mindestens eine erste Faserlage auf einer Oberfläche einer ersten Form und/oder einer zweiten Form aufzubringen, wobei die Oberfläche der ersten Form in Bezug auf Verlauf und Ausbildung im Wesentlichen der Oberseite des herzustellenden Wannenkörpers und die Oberfläche der zweiten Form in Bezug auf Verlauf und Ausbildung im Wesentlichen der Unterseite des herzustellenden Wannenkörpers entspricht,
- die Formen zu schließen, so dass zur Bildung des Wannenkörpers zwischen diesen ein Zwischenraum entsteht, der die mindestens eine Faserlage aufnimmt,
- Gießmaterial in den Zwischenraum zu geben und
- nach Aushärtung des Gießmaterials die Formen zu öffnen und den so hergestellten Wannenkörper zu entnehmen.

Das erfindungsgemäße Verfahren ermöglicht die Herstellung von Badeund Duschwannen in Sandwich-Bauweise, wodurch zum einen das Gewicht gering gehalten und zum anderen eine vergleichsweise hohe Stabilität, insbesondere auch im Randbereich, erzielt werden kann. Somit eignet sich das erfindungsgemäße Verfahren auch zur Herstellung von besonders großen Bade- oder Duschwannen. Wegen der Erzielung einer verhältnismäßig hohen Stabilität lässt sich das erfindungsgemäße Verfahren auch vorteilhaft für die Herstellung von besonders flachen Duschwannen einsetzen. Durch die Verwendung von Formen lassen sich ferner kleinste Radien bis hin zu nahezu scharfen Kanten problemlos herstellen. Ein weiterer Vorteil des erfindungsgemäßen Verfahrens besteht darin, dass sich nahezu jede Art von Profilierung durch entsprechende Ausgestaltung der Form(en) realisieren lässt, wodurch sich auf konstruktiv einfache Weise die unterschiedlichsten Formen und Designs verwirklichen lassen. Dies gilt insbesondere auch für die Integration von rutschhemmenden Oberflächenprofilen. Ebenfalls erlaubt das erfindungsgemäße Verfahren die Herstellung von Bade- und Duschwannen mit einer hohen Geräuschdämpfung, die sich aufgrund der Sandwich-Bauweise erzielen lässt.

Schließlich ermöglicht die Erfindung eine flexible Fertigung von Badeund Duschwannen unterschiedlichster Größen und Farben ohne Lagerbevorratung. Somit ist das erfindungsgemäße Verfahren insbesondere auch für die Herstellung von geringen Stückzahlen wirtschaftlich interessant.

Zweckmäßigerweise wird mindestens eine zweite Faserlage auf der Oberfläche der zweiten Form aufgebracht. Dabei sollte vorzugsweise aus statischen Erwägungen die erste Faserlage, die ja die Oberseite des herzustellenden Wannenkörpers bildet, mit einer größeren Dicke als die zweite Faserlage ausgebildet werden.

Um das Einbringen des Gießmaterials in den Zwischenraum zwischen den geschlossenen Formen zu erleichtern, sollte der Zwischenraum zwischen den geschlossenen Formen evakuiert werden. Hierzu sollte der Zwischenraum mit einer entsprechenden Evakuierungsöffnung in einer der Formen verbunden sein. Außerdem sollte das Gießmaterial unter Druck in den Zwischenraum eingespritzt werden, wozu gegebenenfalls eine weitere Öffnung vorgesehen werden sollte. Das Gießmaterial wird solange in den Zwischenraum eingegeben, bis die beiden Faserlagen durchtränkt und sämtliche anderen Hohlräume ausgefüllt sind.

Eine weitere bevorzugte Ausführung der Erfindung zeichnet sich dadurch aus, dass vor dem Schließen der Formen mindestens ein Verstärkungselement auf oder in einer Faserlage in mindestens eine der beiden Formen an einer einen Trittbereich des herzustellenden Wannenkörpers bildenden Stelle angeordnet wird. Auf diese Weise lässt sich besonders einfach eine Bade- oder Duschwanne in Sandwich-Bauweise herstellen, welche im Trittbereich verstärkt ist. Zweckmäßigerweise erhält das mindestens eine Verstärkungselement die Form einer Platte. Vorzugsweise sollte das mindestens eine Verstärkungselement aus einem Material mit geringem spezifischem Gewicht, insbesondere Holz und/oder Hartschaum, hergestellt werden. Gewöhnlich besitzt ein solches Material außerdem auch noch vorteilhafte Geräuschdämpfungseigenschaften.

Für ein besonders glattes Oberflächenfinish des herzustellenden Wannenkörpers ist es von Vorteil, vor Aufbringen der ersten Faserlage auf die Oberfläche der ersten Form Gelcoat aufzutragen. Dabei können zur Erzielung einer größeren Rutschhemmung entsprechende rutschhemmende Zusatzstoffe in das Gelcoat eingebracht werden; alternativ oder zusätzlich ist es aber auch denkbar, die Oberfläche der ersten Form mit einer rutschhemmenden Profilierung zu versehen, die im Gelcoat entsprechend abgebildet wird.

Gewöhnlich werden die ersten und zweiten Faserlagen aus mindestens einer Fasermatte hergestellt und wird zur Ausbildung der Faserlagen Glasfasermaterial und/oder als Gießmaterial Polyesterharz verwendet.

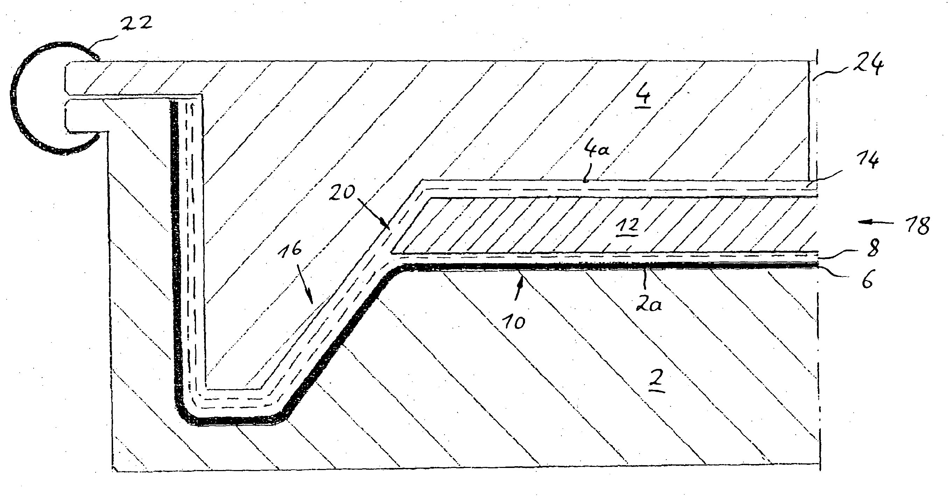

Nachfolgend wird ein bevorzugtes Ausführungsbeispiel der Erfindung anhand der beiliegenden Figur näher erläutert, in der im Querschnitt ausschnittsweise ein Randabschnitt einer Anordnung aus Unterform, einer diese verschließenden Oberform und eines dazwischen ausgebildeten Wannenkörpers gezeigt ist.

In der einzigen Figur ist in Querschnittsdarstellung die Anordnung einer Unterform 2 und einer auf dieser liegenden Oberform 4 gezeigt. Dabei sind die Unterform 2 und die Oberform 4 beispielhaft nur ausschnittsweise mit ihren Randabschnitten dargestellt. Die Unterform 2 und die Oberform 4 dienen im dargestellten Ausführungsbeispiel zur Herstellung einer Duschwanne und sind an ihren Oberflächen 2a und 4a entsprechend komplementär geformt, wobei im dargestellten Ausführungsbeispiel die Oberfläche der Unterform 2 für die Ausbildung der Oberseite des herzustellenden Wannenkörpers und die Oberfläche 4a der Oberform 4 für die Ausbildung der Unterseite des herzustellenden Wannenkörpers vorgesehen ist.

Bevor die Oberform 4 gemäß der Darstellung der Figur auf die Unterform 2 gelegt wird, wird auf die Oberfläche 2a der Unterform 2 eine Gelcoat-Schicht 6 gespritzt. Das verwendete Gelcoat-Material kann rutschhemmende Zusatzstoffe enthalten; alternativ oder zusätzlich ist es aber auch denkbar, die Oberfläche 2a der Unterform 2 mit einer komplementären (in der Figur nicht dargestellten) rutschhemmenden Profilierung zu versehen, die entsprechend in der aufgespritzten Gelcoat-Schicht ausgebildet wird. Durch die Gelcoat-Schicht 6 erhält der herzustellende Wannenkörper im Übrigen ein besonders glattes Oberflächenfinish und somit eine gute Oberflächenqualität.

Auf die Gelcoat-Schicht 6 wird eine erste Glasfaserlage 8 aufgebracht. Diese erste Glasfaserlage 8 besteht gewöhnlich aus mindestens einer Glasfasermatte, die auf die Gelcoat-Schicht 6 gelegt wird.

In demjenigen Abschnitt, der den späteren Trittbereich 10 des herzustellenden Wannenkörpers bildet, wird auf der ersten Glasfaserlage 8 als Verstärkungselement eine Platte 12 gelegt, die vorzugsweise ein geringeres spezifisches Gewicht als die Glasfaserlage 8 aufweist und gewöhnlich aus Holz oder Hartschaum besteht. Gewöhnlich erstreckt sich der Trittbereich 10 und somit die Platte 12 nicht über die gesamte Fläche des herzustellenden Wannenkörpers, sondern endet in einem bestimmten Abstand von dessen Randbereich 16, wie die Figur erkennen lässt.

Anschließend wird eine zweite Glasfaserlage 14 aufgebracht, die im Trittbereich 10 die Platte 12 bedeckt und außerhalb des Trittbereiches 10 im Randbereich 16 direkt auf der ersten Glasfaserlage 8 zu liegen kommt, wie die Figur ebenfalls erkennen lässt. Diese zweite Glasfaserlage 14 besteht gewöhnlich aus mindestens einer Glasfasermatte. Aus statischen Erwägungen ist die erste Glasfaserlage 8 dicker als die zweite Glasfaserlage 14 ausgebildet.

Die Gelcoat-Schicht 6, die erste Glasfaserlage 8, die Platte 12 und die zweite Glasfaserlage 14 bilden wesentliche Komponenten des herzustellenden Wannenkörpers, welcher in der Figur mit dem Bezugszeichen 18 gekennzeichnet ist.

Nachdem diese Komponenten in der zuvor beschriebenen Weise aufgebracht worden sind, wird die Unterform 2 mit Hilfe der Oberform 4 verschlossen, indem die Oberform 4 auf die Unterform 2 gelegt wird, wie in der Figur gezeigt ist. Dabei entsteht zwischen der Unterform 2 und der Oberform 4 ein Zwischenraum 20, der die Wanddicke des herzustellenden Wandkörpers 18 bestimmt. Dabei wird die Unterform 2 von der Oberform 4 so verschlossen, dass der Zwischenraum 20 im Wesentlichen gegenüber der Umgebung hermetisch abgeriegelt wird. Dies ist in der Figur schematisch durch die Anordnung einer Klammer 22 gezeigt, die die Ränder der Unterform 2 und der Oberform 4 umgreift und aufgrund der ihr innewohnenden Vorspannung zusammendrückt.

Allerdings ist im dargestellten Ausführungsbeispiel in der Oberform 4 ein Kanal ausgebildet, der in der Figur schematisch dargestellt und mit dem Bezugszeichen 24 gekennzeichnet ist. Dieser Kanal 24 dient dazu, eventuell noch im Zwischenraum 20 vorhandene Luft abzusaugen und somit den Zwischenraum 20 zu evakuieren und im Wesentlichen unter Vakuum zu setzen. Anschließend wird über diesen Kanal 24 oder eine weitere nicht dargestellte Öffnung flüssiges Polyester unter Druck in den Zwischenraum 20 gespritzt, bis die beiden Glasfaserlagen 8 und 14 durchtränkt und sämtliche anderen eventuellen Hohlräume ausgefüllt sind.

Anstelle der zuvor beschriebenen Evakuierung ist es aber auch denkbar, das flüssige Polyester nur unter verhältnismäßig geringem Druck oder sogar nur unter Schwerkrafteinfluss in den Zwischenraum 20 zu geben und an einer entfernt oder am tiefsten gelegenen Stelle ein Entlüftungsloch vorzusehen, durch das die Luft aus dem Zwischenraum 20 entweicht.

Nachdem das in den Zwischenraum 20 gepumpte Polyester erhärtet ist, wird der so hergestellte Wannenkörper 18 durch Öffnen und Beseitigen der Oberform 4 entnommen und an anderer Stelle weiter bearbeitet.

Im dargestellten Ausführungsbeispiel wird der Wannenkörper 18 auf dem Kopf liegend hergestellt, da die für die Herstellung der Oberseite vorgesehene Gießform als Unterform 2 vorgesehen ist. Es ist selbstverständlich aber auch denkbar, für die Herstellung des Wannenkörpers 18 die in der Figur gezeigte Anordnung um 180° zu drehen und somit gleichsam auf den Kopf zu stellen.

Schließlich sei an dieser Stelle ferner darauf hingewiesen, dass sich die in der Figur gezeigte Anordnung nicht nur für die Herstellung von Duschwannen, sondern auch für die Herstellung von Badewannen eignet und dass grundsätzlich anstelle von Glasfasermatten auch andere Faserstoffe und anstelle von Polyester auch anderes Gießmaterial verwendet werden kann.

## Patentansprüche

1. Verfahren zur Herstellung von Bade- und Duschwannen aus Kunststoff,
**gekennzeichnet durch** die Schritte,
- mindestens eine erste Faserlage (8) auf einer Oberfläche einer ersten Form (2) und/oder einer zweiten Form (4) aufzubringen, wobei die Oberfläche (2a) der ersten Form (2) in Bezug auf Verlauf und Ausbildung im Wesentlichen der Oberseite des herzustellenden Wannenkörpers (18) und die Oberfläche (4a) der zweiten Form (4) in Bezug auf Verlauf und Ausbildung im Wesentlichen der Unterseite des herzustellenden Wannenkörpers (18) entspricht,
- die Formen (2, 4) zu schließen, so dass zur Bildung des Wannenkörpers (18) zwischen diesen ein Zwischenraum (20) entsteht, der die mindestens eine Faserlage (8) aufnimmt,
- Gießmaterial in den Zwischenraum (20) zu geben und
- nach Aushärtung des Gießmaterials die Formen (2, 4) zu öffnen und den so hergestellten Wannenkörper (18) zu entnehmen.

2. Verfahren nach Anspruch 1,
**dadurch gekennzeichnet, dass** mindestens eine zweite Faserlage (14) auf der Oberfläche (4a) der zweiten Form (4) aufgebracht wird.

3. Verfahren nach Anspruch 2,
**dadurch gekennzeichnet, dass** die erste Faserlage (8) mit einer größeren Dicke als die zweite Faserlage (14) ausgebildet wird.

4. Verfahren nach mindestens einem der vorangegangenen Ansprüche,
**dadurch gekennzeichnet, dass** der Zwischenraum (20) zwischen den geschlossenen Formen (2, 4) evakuiert wird.

5. Verfahren nach mindestens einem der vorangegangenen Ansprüche,
**dadurch gekennzeichnet, dass** das Gießmaterial unter Druck in den Zwischenraum (20) gespritzt wird.

6. Verfahren nach mindestens einem der vorangegangenen Ansprüche,
**dadurch gekennzeichnet, dass** vor dem Schließen der Formen (2, 4) mindestens ein Verstärkungselement (12) auf oder in einer Faserlage (8) in mindestens einer der beiden Formen (2) an einer einen Tnttbereich (10) des herzustellenden Wannenkörpers (18) bildenden Stelle angeordnet wird.

7. Verfahren nach Anspruch 6,
**dadurch gekennzeichnet, dass** das mindestens eine Verstärkungselement (12) die Form einer Platte erhält.

8. Verfahren nach Anspruch 6 oder 7,
**dadurch gekennzeichnet, dass** das mindestens eine Verstärkungselement (12) aus einem Material mit geringem spezifischem Gewicht, insbesondere Holz und/oder Hartschaum, hergestellt wird.

9. Verfahren nach mindestens einem der vorangegangenen Ansprüche,
**dadurch gekennzeichnet, dass** vor Aufbringen der ersten Faserlage (8) auf die Oberfläche (2a) der ersten Form (2) Gelcoat (6) aufgetragen wird.

10. Verfahren nach mindestens einem der vorangegangenen Ansprüche,
**dadurch gekennzeichnet, dass** die mindestens eine Faserlage (8, 14) aus mindestens einer Fasermatte hergestellt werden.

11. Verfahren nach mindestens einem der vorangegangenen Ansprüche,
**dadurch gekennzeichnet, dass** zur Ausbildung der mindestens einen Faserlage (8, 14) Glasfasermatten und/oder als Gießmaterial Polyesterharz verwendet werden.
